# EUROPEAN PATENT APPLICATION

(11) **EP 3 281 685 A1**
(43) Date of publication of application: **14.02.2018**
(21) Application number: 16799971.3
(22) Date of filing: 23.05.2016
(51) Int. Cl.: B01D 53/14, B01D 19/00, B01J 19/00

(54) **RELEASE DEVICE AND RELEASE METHOD**

(30) Priority: 25.05.2015 JP 2015105838
(71) Applicant: Kabushiki Kaisha Kobe Seiko Sho (Kobe Steel, Ltd.), Kobe-shi, Hyogo 651-8585 (JP)
(72) Inventor: FUJISAWA, Akitoshi, Hyogo 651-2271 (JP); HANGAI, Hiroo, Hyogo 651-2271 (JP); MATSUOKA, Akira, Hyogo 651-2271 (JP); NOISHIKI, Koji, Hyogo 676-8670 (JP)
(74) Representative: TBK
(86) International application number: PCT/JP2016/065127
(87) International publication number: WO 2016/190266

(57) **Abstract**

A release device for releasing a specific gas component from a rich absorption liquid which is an absorption liquid containing the specific gas component absorbed therein, the release device including a channel structure internally having a release channel which is connected to a rich absorption liquid supply unit so as to receive the rich absorption liquid supplied from the rich absorption liquid supply unit and connected to a liberating agent supply unit so as to receive a liberating agent supplied from the liberating agent supply unit, the liberating agent having a boiling point lower than a boiling point of the rich absorption liquid and being incompatible with the rich absorption liquid. The release channel is a microchannel configured to guide the received rich absorption liquid so that the received rich absorption liquid releases the specific gas component while flowing. The release channel has a treatment channel part which guides the rich absorption liquid and vapor of the liberating agent while bringing the rich absorption liquid and the vapor of the liberating agent into contact with each other so that the specific gas component is liberated from the rich absorption liquid to be transferred to the vapor of the liberating agent.

## Description

### Technical Field

The present invention relates to a release device and a release method.

### Background Art

Conventionally, a release device has been known which is for releasing a specific gas component from an absorption liquid containing the specific gas component absorbed therein. For example, Patent Literature 1 which will be described later discloses an example of such a release device.

Patent Literature 1 discloses a release device as a part of a CO₂ recovery device for recovering CO₂ as a specific gas component. The CO₂ recovery device of Patent Literature 1 is configured to recover CO₂ by causing an absorption liquid to absorb CO₂ from CO₂-containing gas at an absorption column and causing a release device, which is provided with a regeneration column, to release CO₂ from the absorption liquid containing CO₂ absorbed therein.

Specifically, a rich solution, which is an absorption liquid containing CO₂ absorbed therein at the absorption column, is supplied to the regeneration column, and the rich solution is sprayed from an upper part in the regeneration column. The regeneration column has a filling layer provided therein. The rich solution sprayed in the regeneration column descends through the filling layer, and CO₂ is liberated from the rich solution in this process. With such a structure, the rich solution is converted into a lean solution (regeneration solution) from which almost all CO₂ has been removed, and the lean solution accumulates on a bottom part in the regeneration column.

At least a part of the lean solution which has accumulated on the bottom part in the regeneration column is guided to a regenerative heater, is heated and evaporates in the regenerative heater, and is then returned to a lower part in the regeneration column. Vapor of the lean solution returned to the lower part in the regeneration column ascends in the regeneration column, and comes into contact with a descending rich solution, so that CO₂ is liberated from the rich solution. With such a structure, CO₂ is released from the rich solution. The regeneration column is configured to discharge gas, which has been subjected to regeneration treatment, from the top part thereof. The gas discharged from the regeneration column is a gas mixture of the vapor and CO₂ liberated from the rich solution. The gas mixture discharged from the regeneration column is introduced to a condenser. In the condenser, only vapor in the gas mixture is condensed and separated, and the remaining CO₂ is discharged from the condenser and recovered.

The technique disclosed in Patent Literature 1, however, has problems that the energy required for release treatment of releasing CO₂ as a specific gas component from the rich solution increases and that the efficiency of release treatment is low. The reason is as follows.

In Patent Literature 1, vapor of the lean solution generated at the regenerative heater is used for liberating CO₂ from the rich solution at the regeneration column. A large heat quantity is required at the regenerative heater in order to vaporize the lean solution to obtain vapor necessary for liberation of CO₂ from the rich solution at the regeneration column. This causes an increase in the energy required for release treatment of CO₂.

Moreover, CO₂ liberated from the rich solution in the regeneration column is transferred to vapor which has come into contact with the rich solution, and the transferring speed of CO₂ affects the efficiency of release treatment. The contact area per unit volume of the rich solution and the vapor, however, is small in a space having a large volume such as the inside of the regeneration column, and therefore it is difficult to improve the transferring speed of CO₂ from the rich solution to the vapor. As a result, it becomes difficult to improve the efficiency of release treatment of CO₂.

### Citation List

### Patent Literature

Patent Literature 1: Japanese Patent Application Laid-Open No. 2008-62165

### Summary of Invention

An object of the present invention is to provide a release device and a release method, which can reduce the energy required for treatment of releasing a specific gas component from an absorption liquid containing the specific gas component absorbed therein and can improve the efficiency of release treatment of a specific gas component.

A release device according to an aspect of the present invention is a release device for releasing a specific gas component from a rich absorption liquid which is an absorption liquid containing the specific gas component absorbed therein, the release device including a channel structure internally having a release channel which is connected to a rich absorption liquid supply unit so as to receive the rich absorption liquid supplied from the rich absorption liquid supply unit and connected to a liberating agent supply unit so as to receive a liberating agent supplied from the liberating agent supply unit, the liberating agent having a boiling point lower than a boiling point of the rich absorption liquid and being incompatible with the rich absorption liquid, in which the release channel is a microchannel configured to guide the received rich absorption liquid so that the received rich absorption liquid releases the specific gas component while flowing, and the release channel has a treatment channel part which guides the rich absorption liquid and vapor of the liberating agent while bringing the rich absorption liquid and the vapor of the liberating agent into contact with each other so that the specific gas component is liberated from the rich absorption liquid to be transferred to the vapor of the liberating agent.

A release method according to another aspect of the present invention is a release method for releasing a specific gas component from a rich absorption liquid which is an absorption liquid containing the specific gas component absorbed therein, the release method including: a preparation step of preparing a channel structure internally having a release channel which is a microchannel configured to guide the rich absorption liquid so that the rich absorption liquid releases the specific gas component while flowing, the release channel having a treatment channel part through which the rich absorption liquid and vapor of a liberating agent are capable of flowing in the state of being in contact with each other, the liberating agent having a boiling point lower than a boiling point of the rich absorption liquid and being incompatible with the rich absorption liquid; and a liberation step of liberating the specific gas component from the rich absorption liquid to transfer the specific gas component to the vapor of the liberating agent by causing the rich absorption liquid and the vapor of the liberating agent to flow through the treatment channel part while bringing the rich absorption liquid and the vapor of the liberating agent into contact with each other.

### Brief Description of Drawings

FIG. 1 is a pattern diagram of an absorbing and separating device including a release device according to an embodiment of the present invention.
FIG. 2 is a schematic perspective view of a release unit of a release device.
FIG. 3 is a plan view illustrating one plate surface of a release channel substrate which constitutes a channel structure of the release unit illustrated in FIG. 2.
FIG. 4 is a plan view illustrating a plate surface on the opposite side of the release channel substrate illustrated in FIG. 3.
FIG. 5 is a plan view of a heating medium channel substrate which constitutes a channel structure of the release unit illustrated in FIG. 2.
FIG. 6 is a pattern diagram for explaining a vaporization step and a liberation step.
FIG. 7 is a pattern diagram of an absorbing and separating device including a release device according to a variation of the present invention.
FIG. 8 is a pattern diagram for explaining a liberation step at a release channel in a channel structure of the release device illustrated in FIG. 7.

### Description of Embodiments

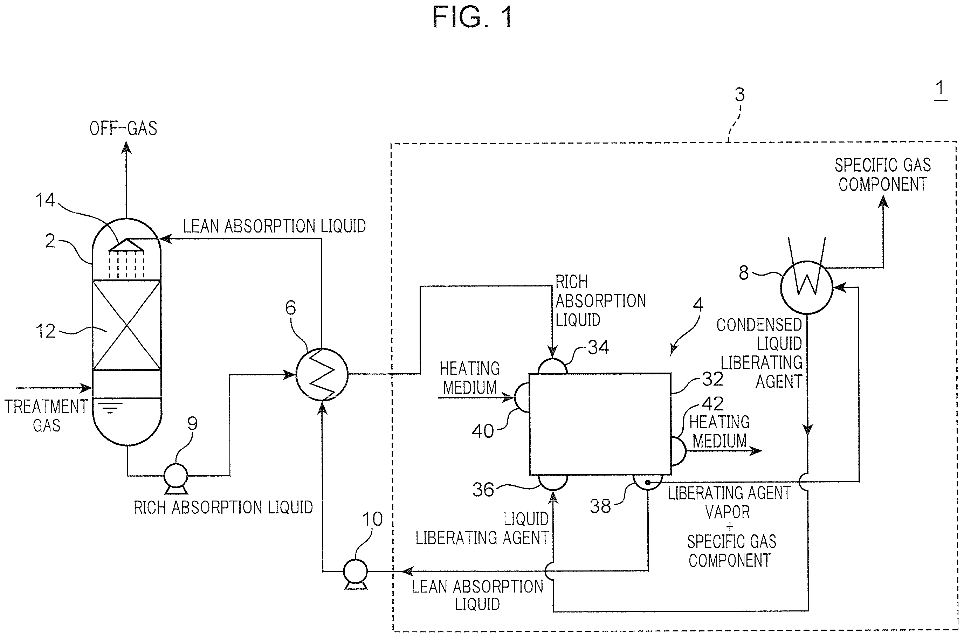

First, a release device 3 according to an embodiment of the present invention will be described with reference to FIGS. 1 to 6.

The release device 3 (see FIG. 1) according to the embodiment is a device configured to perform treatment of releasing a specific gas component from a rich absorption liquid, which is an absorption liquid containing the specific gas component absorbed therein. The release device 3 constitutes a part of an absorbing and separating device 1 configured to cause the absorption liquid to absorb the specific gas component from treatment gas containing the specific gas component, and then release the specific gas component from the absorption liquid and recover the specific gas component.

The absorbing and separating device 1 is provided with an absorption column 2, the release device 3, a heat exchanger 6, a first pump 9, and a second pump 10 as illustrated in FIG. 1.

The absorption column 2 is configured to perform treatment of causing an absorption liquid to absorb a specific gas component from treatment gas containing the specific gas component. A filling layer 12 is provided in an area in the middle along the vertical direction in the absorption column 2. A spray unit 14 configured to spray an absorption liquid is provided in an area on the upper side of the filling layer 12 in the absorption column 2, that is, in an area at an upper part in the absorption column 2. Moreover, the treatment gas is guided to an area on the lower side of the filling layer 12 in the absorption column 2, that is, to an area at a lower part in the absorption column 2.

The absorption liquid is sprayed in the absorption column 2 from the spray unit 14, and the sprayed absorption liquid descends through the filling layer 12 while coming into contact with treatment gas ascending from an area at a lower part in the absorption column 2. This contact causes the absorption liquid to absorb the specific gas component from the treatment gas. The absorption liquid which has absorbed the specific gas component accumulates on a bottom part in the absorption column 2, and is discharged from the inside of the absorption column 2. An absorption liquid containing a specific gas component absorbed therein will be hereinafter referred to as a rich absorption liquid.

On the other hand, off-gas, that is, treatment gas from which a specific gas component has been absorbed by the absorption liquid, ascends and is discharged from the top part of the absorption column 2.

A discharge part of a bottom part of the absorption column 2 where the rich absorption liquid is discharged is connected to the heat exchanger 6 via a conduit. The conduit which joins the discharge part of the bottom part of the absorption column 2 to the heat exchanger 6 is provided with the first pump 9 configured to transfer the rich absorption liquid, which has been discharged from the absorption column 2, to the heat exchanger 6 side. The first pump 9 is connected to a release channel 50 in a channel structure 32 through the conduit, the heat exchanger 6, and a rich absorption liquid introducing header 34, which will be described later. The first pump 9 is a rich absorption liquid supply unit configured to supply the rich absorption liquid through the conduit, the heat exchanger 6, and the rich absorption liquid introducing header 34, which will be described later, to the release channel 50 in the channel structure 32.

The heat exchanger 6 is configured to perform heat exchange between the rich absorption liquid and a lean absorption liquid, which has a density of a specific gas component lowered by liberation of the specific gas component at a release unit 4 as will be described later. The heat exchanger 6 is configured to heat the rich absorption liquid by heat exchange.

An outlet for the lean absorption liquid of the heat exchanger 6 is joined to the spray unit 14 of the absorption column 2 via a conduit. With such a structure, the lean absorption liquid discharged from the heat exchanger 6 is supplied to the absorption column 2 and sprayed in the absorption column 2 from the spray unit 14 as an absorption liquid.

An outlet for the rich absorption liquid of the heat exchanger 6 is joined to the release unit 4 via a conduit. With such a structure, the rich absorption liquid discharged from the heat exchanger 6 is supplied to the release unit 4.

The release device 3 performs treatment for releasing the specific gas component from the rich absorption liquid, which is transferred from the heat exchanger 6 to the release unit 4 of the release device 3, and recovering the specific gas component. The release device 3 is provided with the release unit 4 and a condenser 8.

The release unit 4 is configured to perform release treatment of the specific gas component from the rich absorption liquid by liberating the specific gas component from the rich absorption liquid and transferring the specific gas component into a liberating agent. In other words, the release unit 4 has a function of releasing the specific gas component from the rich absorption liquid and regenerating a lean absorption liquid, which has lowered a density of the specific gas component, from the rich absorption liquid.

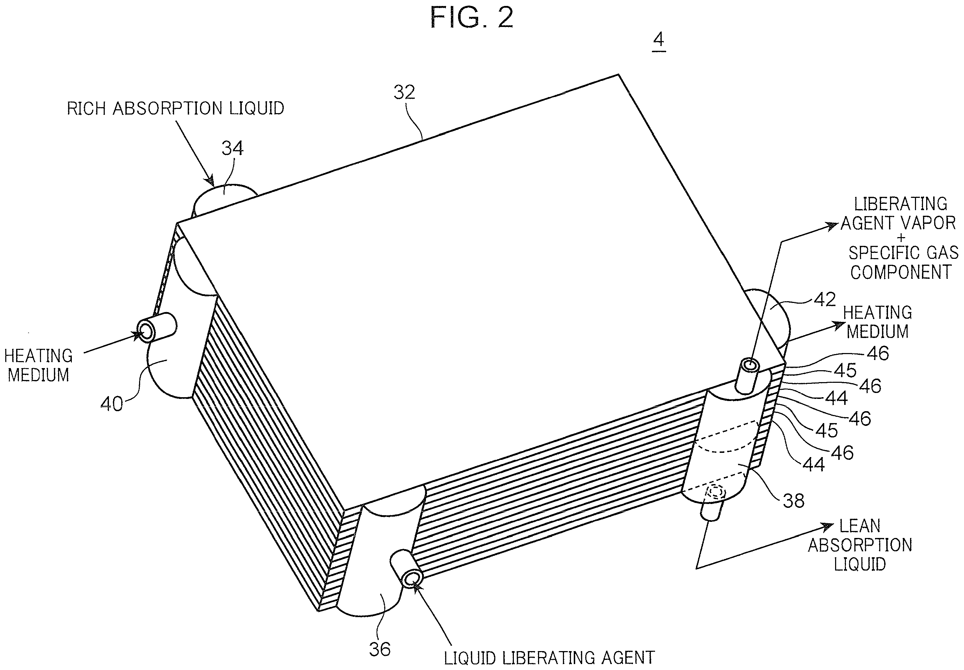

The release unit 4 has the channel structure 32, the rich absorption liquid introducing header 34, a liberating agent introducing header 36, a separating header 38, a heating medium introducing header 40, and a heating medium discharging header 42 as illustrated in FIG. 2.

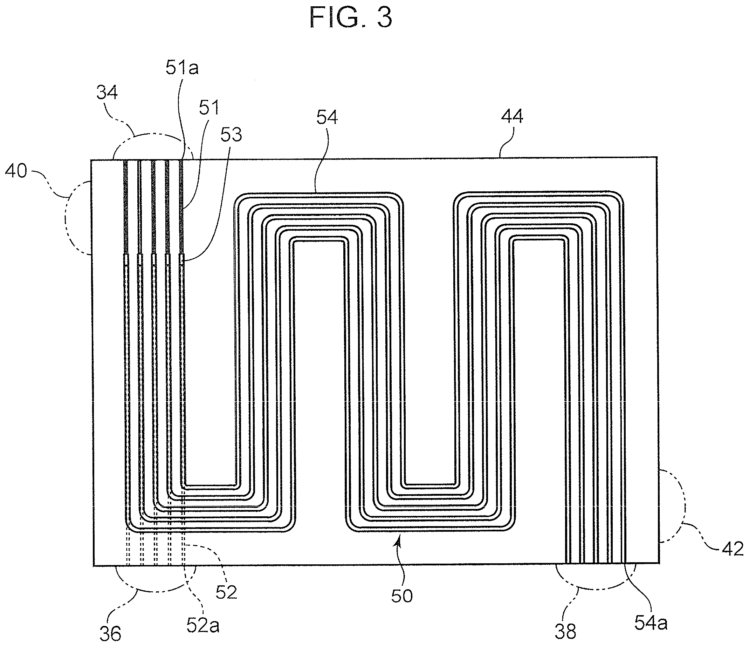

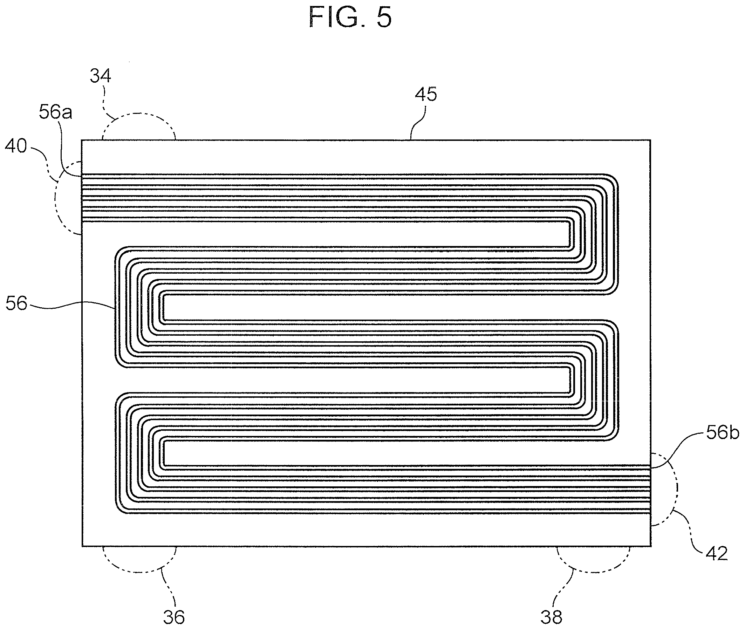

The channel structure 32 internally has: a large number of release channels 50 (see FIG. 3) configured to cause the rich absorption liquid to release the specific gas component while flowing; and a large number of heating medium channels 56 (see FIG. 5) configured to allow a heating medium to flow to supply heat for heating a fluid flowing through confluent fluid channel parts 54, which will be described later, of the release channels 50. The release channels 50 and the heating medium channels 56 are microchannels each having a minute channel diameter. Moreover, a heating medium channel 56 is an example of a heat supply unit and a treatment channel heat supply unit in the present invention.

The channel structure 32 is constituted of a laminate formed by laminating a large number of plates made of stainless steel, for example, and bonding the plates with each other as illustrated in FIG. 2. A large number of plates which constitute the channel structure 32 include a plurality of release channel substrates 44, a plurality of heating medium channel substrates 45, and a plurality of sealing plates 46. In the channel structure 32, the release channel substrates 44 and the heating medium channel substrates 45 are laminated alternately and repeatedly with the sealing plates 46 each being sandwiched therebetween.

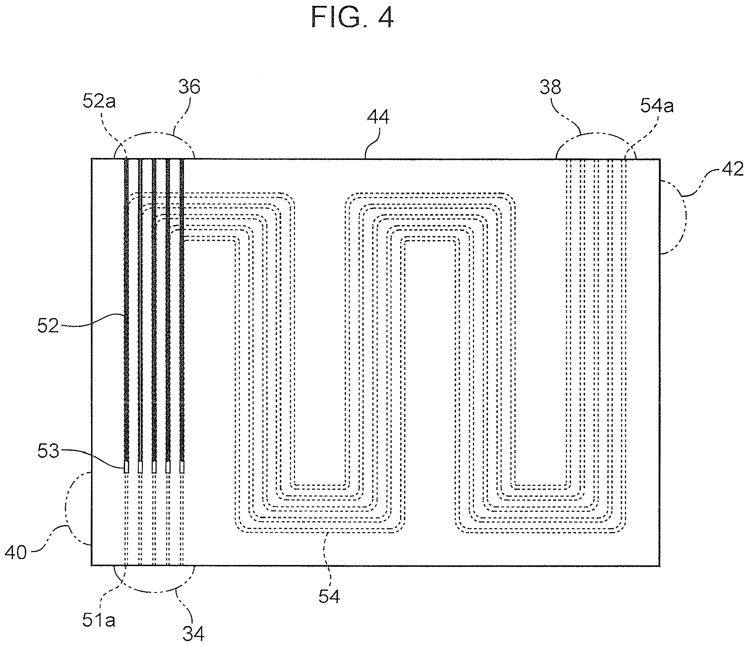

In each release channel substrate 44, a plurality of release channels 50 are formed being arranged in parallel as illustrated in FIG. 3. Each release channel 50 has a first receiving channel part 51, a second receiving channel part 52, a confluence part 53, and the confluent fluid channel part 54 as illustrated in FIGS. 3 and 4.

The first receiving channel part 51 is a channel configured to guide a rich absorption liquid, which is introduced to the first receiving channel part 51, to the confluence part 53. The second receiving channel part 52 is a channel configured to guide the liberating agent, which is introduced to the second receiving channel part 52, to the confluence part 53. The confluence part 53 is joined to a downstream side end of the first receiving channel part 51 and to a downstream side end of the second receiving channel part 52. The confluence part 53 is a part configured to receive the rich absorption liquid from the first receiving channel part 51 and the liberating agent from the second receiving channel part 52, and cause confluence of the rich absorption liquid and the liberating agent. The confluent fluid channel part 54 is joined to the downstream side of the confluence part 53. The confluent fluid channel part 54 is a channel where a vaporization treatment and a liberation treatment are performed, the vaporization treatment being a treatment of vaporizing the liberating agent while causing the rich absorption liquid and the liberating agent, which have flown from the confluence part 53 into the confluent fluid channel part 54, to flow and bringing the rich absorption liquid and the liberating agent into contact with each other, the liberation treatment being a treatment of liberating the specific gas component from the rich absorption liquid to transfer the specific gas component into liberating agent vapor.

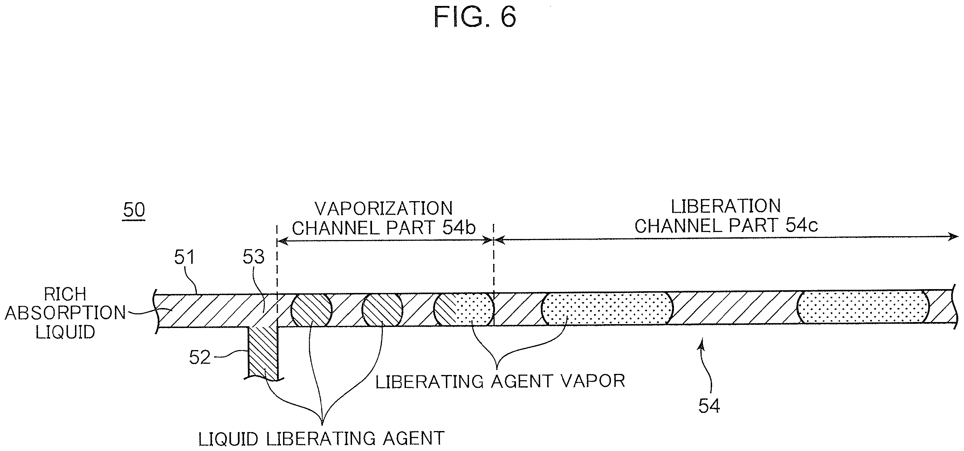

FIG. 6 schematically illustrates the release channel 50. The confluent fluid channel part 54 has a vaporization channel part 54b on the upstream side joined to the confluence part 53, and a liberation channel part 54c joined to the downstream side of the vaporization channel part 54b as illustrated in FIG. 6. The vaporization channel part 54b is joined to the downstream side of the confluence part 53 so as to receive confluent fluid formed of the rich absorption liquid and the liberating agent, which have been subjected to confluence at the confluence part 53, from the confluence part 53. The vaporization channel part 54b is constructed to receive heat, which is to vaporize the liberating agent in the received confluent fluid so as to generate vapor of the liberating agent, from the heating medium channel 56. That is, the vaporization channel part 54b is a part where vaporization treatment of vaporizing the liberating agent with supplied heat so as to generate vapor of the liberating agent is performed. The liberation channel part 54c is a part where liberation treatment is performed. Specifically, the liberation channel part 54c is a part where the rich absorption liquid and the liberating agent vapor, which have flown from the vaporization channel part 54b into the liberation channel part 54c, are circulated in contact with each other so that the specific gas component is liberated from the rich absorption liquid and transferred into the liberating agent vapor. The liberation channel part 54c is an example of a treatment channel part in the present invention.

A plurality of minute grooves having shapes corresponding to the respective first receiving channel parts 51 and a plurality of minute grooves having shapes corresponding to the respective confluent fluid channel parts 54 are formed at one plate surface of each release channel substrate 44. Openings of the grooves at the one plate surface are sealed by a sealing plate 46 (see FIG. 2) laminated on the one plate surface, so that each first receiving channel part 51 and each confluent fluid channel part 54 are formed.

Moreover, a plurality of minute grooves having shapes corresponding to the respective second receiving channel parts 52 are formed at a plate surface on the opposite side to the one plate surface of each release channel substrate 44. Openings of the grooves at the plate surface on the opposite side are sealed by the sealing plate 46 (see FIG. 2) laminated on the plate surface on the opposite side, so that each second receiving channel part 52 is formed.

Each release channel substrate 44 is provided with a plurality of through holes, which have shapes corresponding to each confluence part 53 and are formed to penetrate the release channel substrate 44 from the one plate surface to the plate surface on the opposite side in the thickness direction of the release channel substrate 44. Each through hole forms each confluence part 53.

Each first receiving channel part 51 has a first introducing port 51a, which receives the rich absorption liquid, at an upstream side end thereof. Each second receiving channel part 52 has a second introducing port 52a, which receives the liberating agent, at an upstream side end thereof. Moreover, each confluent fluid channel part 54 has an outlet 54a, out of which allow the lean absorption liquid and the liberating agent vapor to flow after liberation treatment, at a downstream side end thereof. Each first introducing port 51a, each second introducing port 52a, and each outlet 54a are open at respective corresponding side surfaces of the channel structure 32.

Each heating medium channel substrate 45 is formed in the state where a plurality of heating medium channels 56 are arranged in parallel as illustrated in FIG. 5. Each heating medium channel 56 has a meander shape. A plurality of minute grooves having shapes corresponding to the respective heating medium channels 56 are formed at one plate surface of each heating medium channel substrate 45. Openings of the grooves at the one plate surface are sealed by the sealing plate 46 (see FIG. 2) laminated on the plate surface, so that each heating medium channel 56 is formed.

In the channel structure 32, the release channel substrates 44 and the heating medium channel substrates 45 are alternately laminated with the sealing plates 46 being sandwiched therebetween, so that the plurality of release channels 50 formed at each release channel substrate 44 and the plurality of heating medium channels 56 formed at each heating medium channel substrate 45 are arranged alternately in the lamination direction of each plate. The release channel 50 and the heating medium channel 56, which are adjacent to each other in the lamination direction, are arranged with a distance therebetween with which a fluid mixture flowing through the release channel 50 and a heating medium flowing through the heating medium channel 56 can exchange heat with each other. Each heating medium channel 56 has an introducing port 56a, which receives the heating medium, at an upstream side end thereof. Moreover, each heating medium channel 56 has an outlet 56b, out of which the heating medium flows, at a downstream side end thereof. Each introducing port 56a and each outlet 56b are open at respective corresponding side surfaces of the channel structure 32.

The rich absorption liquid introducing header 34 (see FIG. 2) is for distributing and supplying the rich absorption liquid to the first introducing port 51a of each release channel 50 (see FIG. 3). The rich absorption liquid introducing header 34 is attached to a side surface of the channel structure 32 where the first introducing ports 51a are formed, so as to collectively cover the first introducing ports 51a of all release channels 50 in the channel structure 32. The rich absorption liquid introducing header 34 is joined to an outlet for the rich absorption liquid of the heat exchanger 6 via a conduit. The rich absorption liquid introducing header 34 is configured in such a manner that the rich absorption liquid discharged from the heat exchanger 6 is supplied to the rich absorption liquid introducing header 34.

The liberating agent introducing header 36 (see FIG. 2) is for distributing and supplying a liquid liberating agent to the second introducing port 52a of each release channel 50 (see FIG. 3). The liberating agent introducing header 36 is attached to a side surface of the channel structure 32 where the second introducing ports 52a are formed, so as to collectively cover the second introducing ports 52a of all release channels 50 in the channel structure 32.

The separating header 38 (see FIG. 2) is for causing gas-liquid separation of the fluid mixture, which has flown out of each outlet 54a (see FIG. 3), of the lean absorption liquid and the liberating agent vapor. The separating header 38 is attached to a side surface of the channel structure 32 where the outlets 54a are formed, so as to collectively cover the outlets 54a of all release channels 50 in the channel structure 32. A fluid mixture is discharged from each outlet 54a to the internal space of the separating header 38. In the internal space, gas-liquid separation of the fluid mixture is caused by a difference in specific gravity between the lean absorption liquid and the liberating agent vapor.

A lower exit for discharging the lean absorption liquid separated in the separating header 38 is provided at a lower part of the separating header 38. The lower exit is joined to the heat exchanger 6 (see FIG. 1) via a conduit. With such a structure, the lean absorption liquid discharged from the lower exit is guided through a conduit to the heat exchanger 6.

Moreover, an upper exit for discharging the liberating agent vapor separated in the separating header 38 is provided at an upper part of the separating header 38. The upper exit is joined to the condenser 8 (see FIG. 1) via a conduit. With such a structure, the liberating agent vapor discharged from the upper exit is guided through the conduit to the condenser 8.

The heating medium introducing header 40 (see FIG. 2) is for distributing and supplying the heating medium to the introducing port 56a of each heating medium channel 56 (see FIG. 5). The heating medium introducing header 40 is attached to a side surface of the channel structure 32 where the introducing ports 56a are formed, so as to collectively cover the introducing ports 56a of all heating medium channels 56 in the channel structure 32. The heating medium introducing header 40 is connected to supply piping of the heating medium. The heating medium is supplied from the supply piping to the heating medium introducing header 40.

The heating medium discharging header 42 (see FIG. 2) is for receiving a used heating medium, which has been used for heating in the channel structure 32 and flown out of the outlet 56b of each heating medium channel 56 (see FIG. 5). The heating medium discharging header 42 is attached to a side surface of the channel structure 32 where the outlets 56b are formed, so as to collectively cover the outlets 56b of all heating medium channels 56 in the channel structure 32. The heating medium discharging header 42 is connected to discharge piping of the heating medium. The used heating medium discharged into the heating medium discharging header 42 is discharged through the discharge piping.

The condenser 8 (see FIG. 1) is for cooling and condensing the introduced liberating agent vapor. Condensation of the liberating agent at the condenser 8 causes separation of the specific gas component which has been mixed in the liberating agent vapor. A bottom exit for discharging the condensed liquid liberating agent is provided at a bottom part of the condenser 8. The bottom exit is joined to the liberating agent introducing header 36 of the release unit 4 via a conduit. That is, the condenser 8 is connected to the release channel 50 in the channel structure 32 via the conduit and the liberating agent introducing header 36. With such a structure, the liquid liberating agent discharged from the condenser 8 is transferred to the liberating agent introducing header 36. Moreover, an upper exit for discharging the separated specific gas component is provided at an upper part of the condenser 8. The condenser 8 is a liberating agent supply unit configured to supply the liberating agent to the release channel 50 in the channel structure 32 through the conduit and the liberating agent introducing header 36.

Next, a release method of the specific gas component according to the embodiment will be described.

In the release method of the embodiment, the absorbing and separating device 1 having the release device 3 with the above structure is prepared, and release treatment is performed using the release device 3 of the prepared absorbing and separating device 1. Specifically, in the release method of the embodiment, a specific gas component is released from a rich absorption liquid, which is an absorption liquid containing the specific gas component absorbed therein at the absorption column 2 of the absorbing and separating device 1. The specific gas component is CO₂, for example, and the absorption liquid is an amine-based aqueous solution, for example.

In the absorption column 2, the absorption liquid sprayed from the spray unit 14 descends through the filling layer 12 while treatment gas introduced to an area at a lower part in the absorption column 2 ascends through the filling layer 12, and the absorption liquid and the treatment gas come into contact with each other in this process, so that the specific gas component is absorbed by the absorption liquid from the treatment gas. Off-gas, that is, treatment gas from which a specific gas component has been absorbed by the absorption liquid, is discharged from the top part of the absorption column 2. A rich absorption liquid, that is, an absorption liquid which has absorbed the specific gas component, accumulates on a bottom part in the absorption column 2, is discharged from the bottom part, and is then transferred by the first pump 9 to the heat exchanger 6. The temperature of the rich absorption liquid, which is discharged from the absorption column 2 and transferred to the heat exchanger 6, reaches approximately 70 °C by heat, which is generated by an absorption reaction of the specific gas component from the treatment gas to the absorption liquid in the absorption column 2.

In the heat exchanger 6, heat is exchanged between the rich absorption liquid and a lean absorption liquid, which is discharged from the separating header 38 of the release unit 4 as will be described later. The temperature of the lean absorption liquid is approximately 120 °C. The rich absorption liquid is heated to a temperature near 120 °C by heat exchange with the lean absorption liquid, and is then transferred to the release unit 4. On the other hand, the lean absorption liquid is cooled by the heat exchange, and is then supplied to the spray unit 14 of the absorption column 2 as an absorption liquid to be used for absorption treatment.

In the release unit 4, release treatment of releasing the specific gas component is performed for the rich absorption liquid which has been transferred to the release unit 4 as described above. Now, the release method will be described.

The rich absorption liquid is introduced to the rich absorption liquid introducing header 34 (see FIG. 2), and is distributed and introduced from the rich absorption liquid introducing header 34 to the first receiving channel part 51 of each release channel 50 (see FIG. 3). Moreover, the liquid liberating agent is supplied to the liberating agent introducing header 36 (see FIG. 2). The liquid liberating agent supplied to the liberating agent introducing header 36 is distributed and introduced from the liberating agent introducing header 36 to the second receiving channel part 52 (see FIG. 3) of each release channel 50.

The liberating agent is used as a medium which liberates the specific gas component from the rich absorption liquid to transfer the specific gas component into vapor of the liberating agent when the liberating agent in a vapor state comes into contact with the rich absorption liquid as will be described later. Specifically, the liberating agent is a liquid which has a boiling point lower than the absorption liquid (rich absorption liquid) and is incompatible with the absorption liquid. In a case where an amine-based aqueous solution is used as the absorption liquid, an organic solvent such as hexane, heptane, octane, or toluene, for example, is used as the liberating agent.

A high-temperature heating medium is supplied to the heating medium introducing header 40 (see FIG. 2). The supplied heating medium is distributed and introduced from the heating medium introducing header 40 to each heating medium channel 56 (see FIG. 5).

The rich absorption liquid introduced to the first receiving channel part 51 and the liquid liberating agent introduced to the second receiving channel part 52 are subjected to confluence at the confluence part 53 (see FIG. 3), and flow to the confluent fluid channel part 54 in the state of being in contact with each other. In the embodiment, the rich absorption liquid and the liberating agent flow through the confluent fluid channel part 54 in the state of a slug flow. In the vaporization channel part 54b (see FIG. 6) on the upstream side of the confluent fluid channel part 54, the liquid liberating agent in the slug flow is heated and vaporized by heat supplied from the heating medium flowing through the heating medium channel 56 (see FIG. 5) and is converted into the liberating agent vapor. With such a structure, a slug flow composed of a slug of the rich absorption liquid and a slug of the liberating agent vapor, which are in contact with each other, flows from the vaporization channel part 54b to the liberation channel part 54c (see FIG. 6) on the downstream side. In a flowing process of the slug flow of the rich absorption liquid and the liberating agent vapor through the liberation channel part 54c, liberation treatment is performed in which the specific gas component (CO₂) is liberated from the slug of the rich absorption liquid and the liberated specific gas component is transferred into the slug of the liberating agent vapor, which is in contact with the slug of the rich absorption liquid, via a contact interface between both slugs.

Specifically, since the partial pressure of the specific gas component in the liberating agent vapor is lower than the partial pressure of the specific gas component in the rich absorption liquid, the specific gas component is liberated from the rich absorption liquid having a higher partial pressure of the specific gas component and is transferred into the liberating agent vapor having a lower partial pressure of the specific gas component in a state where the slug of the liberating agent vapor and the slug of the rich absorption liquid are in contact with each other. Moreover, liberation of the specific gas component from the rich absorption liquid is an endothermic reaction. Therefore, heat is supplied from the heating medium flowing through the heating medium channel 56 to the rich absorption liquid flowing through the liberation channel part 54c, so that liberation of the specific gas component from the rich absorption liquid is promoted. Release treatment of the specific gas component from the rich absorption liquid is achieved with the above liberation treatment.

The liberation treatment converts the rich absorption liquid into a lean absorption liquid having a lowered density of the specific gas component. A fluid mixture of the lean absorption liquid and the liberating agent vapor containing the specific gas component then flows from the outlet 54a of each release channel 50 to the internal space of the separating header 38. The fluid mixture which has flown into the internal space of the separating header 38 (see FIG. 2) is subjected to gas-liquid separation into the liberating agent vapor containing the specific gas component and the lean absorption liquid by the difference in specific gravity. With such a structure, the liberating agent vapor containing the specific gas component is discharged from the upper exit of the separating header 38, and the lean absorption liquid is discharged from the lower exit of the separating header 38.

The lean absorption liquid discharged from the lower exit of the separating header 38 is transferred to the heat exchanger 6 by the second pump 10 and used for heat exchange with the rich absorption liquid as described above, and is then supplied to the spray unit 14 of the absorption column 2.

The liberating agent vapor containing the specific gas component discharged from the upper exit of the separating header 38 is introduced to the condenser 8. The liberating agent vapor containing the specific gas component is then cooled at the condenser 8, so that only the liberating agent vapor therein is condensed to be converted into a liquid liberating agent. The condensed liquid liberating agent flows from the condenser 8 to the liberating agent introducing header 36 of the release unit 4, and is introduced from the liberating agent introducing header 36 to the second receiving channel part 52 of each release channel 50. On the other hand, the liberating agent vapor is condensed in the condenser 8 so that only the specific gas component remains, and the specific gas component is discharged from the condenser 8 and is recovered.

Release treatment of the specific gas component from the rich absorption liquid according to the embodiment is performed in such a manner.

In the embodiment, the liberation channel part 54c of the release channel 50 circulates the rich absorption liquid and vapor of the liberating agent, which has a boiling point lower than the rich absorption liquid and is incompatible with the rich absorption liquid, in the state where the rich absorption liquid and the vapor of the liberating agent are in contact with each other, so that the specific gas component is liberated from the rich absorption liquid and transferred to the vapor of the liberating agent. It is therefore possible to use the vapor of the liberating agent, which has been obtained by vaporization with a heat quantity smaller than a heat quantity necessary for vaporization of the absorption liquid, for liberation of the specific gas component from the rich absorption liquid. It is therefore possible to reduce the energy required for release treatment of the specific gas component from the rich absorption liquid in comparison with a conventional structure in which vapor, which has been obtained by vaporization of an absorption liquid, is used for liberating a specific gas component from a rich absorption liquid.

Moreover, in the embodiment, since the liberation channel part 54c of the release channel 50, which is a microchannel, circulates the rich absorption liquid and the vapor of the liberating agent while bringing the rich absorption liquid and the vapor of the liberating agent into contact with each other, it is possible to increase the contact area per unit volume of the rich absorption liquid and the vapor of the liberating agent. It is therefore possible to improve transfer efficiency of the specific gas component from the rich absorption liquid to the vapor of the liberating agent via the contact interface therebetween. As a result, it is possible to improve the efficiency of release treatment of the specific gas component from the rich absorption liquid.

It is also possible with the embodiment to vaporize the liberating agent, which flows through the vaporization channel part 54b of the release channel 50 in the channel structure 32, with heat supplied from the heating medium channel 56 in the channel structure 32 so as to generate vapor of the liberating agent. It is therefore possible to downsize the release device 3 in comparison with a release device which is provided with a heating device configured to heat a liberating agent outside a channel structure so as to generate vapor of the liberating agent.

It is also possible with the embodiment to heat the rich absorption liquid, which flows through the liberation channel part 54c, with heat supplied from the heating medium channel 56 in the channel structure 32. It is therefore possible to heat the rich absorption liquid, which flows through the liberation channel part 54c, so as to promote liberation of CO₂ from the rich absorption liquid.

It should be noted that the embodiment disclosed herein is to be interpreted as being illustrative and not restrictive in all aspects. The scope of the present invention is defined not by the above description on the embodiment but by the appended claims, and includes all modifications within the scope and meanings equivalent to the claims.

For example, absorption equipment other than an absorption column may be used, although an absorption column is used in the above embodiment as absorption equipment configured to cause the absorption liquid to absorb the specific gas component from the treatment gas.

Moreover, a specific gas component to be separated is not necessarily limited to CO₂, but may be other gas components. In such a case, an absorption liquid which can selectively absorb a gas component to be separated may be used as an absorption liquid, and a liberating agent which has a boiling point lower than the absorption liquid and is incompatible with the absorption liquid may be used for liberation treatment of the gas component from the absorption liquid.

Moreover, a heat supply unit configured to supply heat to a fluid which flows through the confluent fluid channel part in the channel structure is not necessarily limited to the above heating medium channel. For example, a heat holding material, which is provided in an area corresponding to the vaporization channel part and the liberation channel part in the channel structure so as to enable heat exchange with the liberating agent in the confluent fluid flowing through the vaporization channel part and the liberation channel part and holds heat supplied from the outside, may be provided as a heat supply unit. Moreover, a heat supply unit configured to supply heat to the vaporization channel part and a heat supply unit configured to supply heat to the liberation channel part may be provided independently.

Moreover, although the above embodiment has been described as a structure in which the liberating agent and the rich absorption liquid flow through the vaporization channel part and the liberation channel part in the form of a slug flow, the present invention is not necessarily limited to a structure in which the liberating agent and the rich absorption liquid flow in this form. For example, the liberating agent and the rich absorption liquid may flow through the vaporization channel part and the liberation channel part in the form of a two-layer flow. In this case, vaporization of the liberating agent and liberation of the specific gas component from the rich absorption liquid by the liberating agent vapor can be also achieved as with the above embodiment.

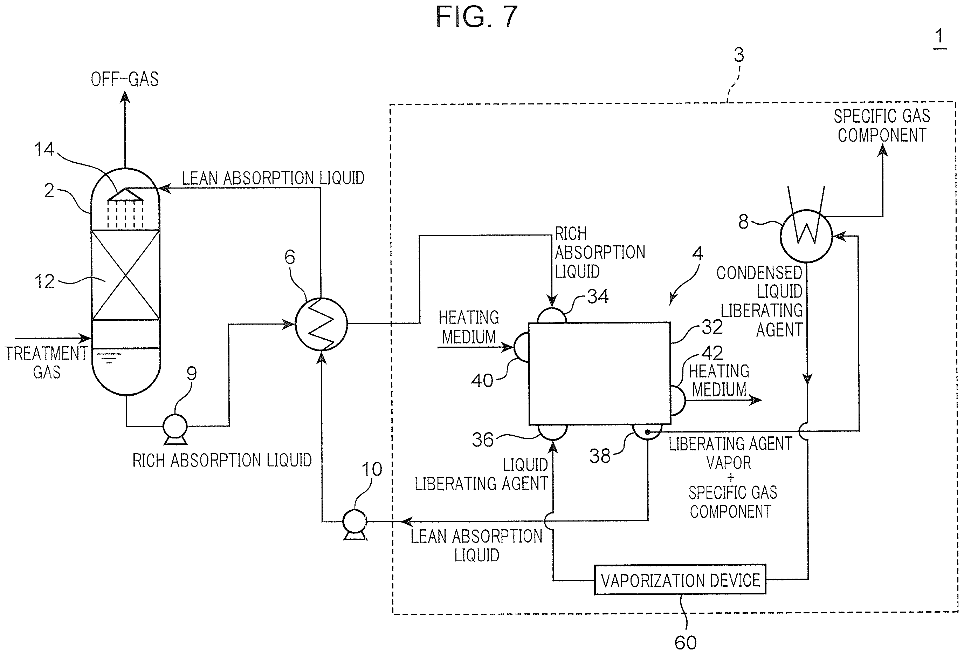

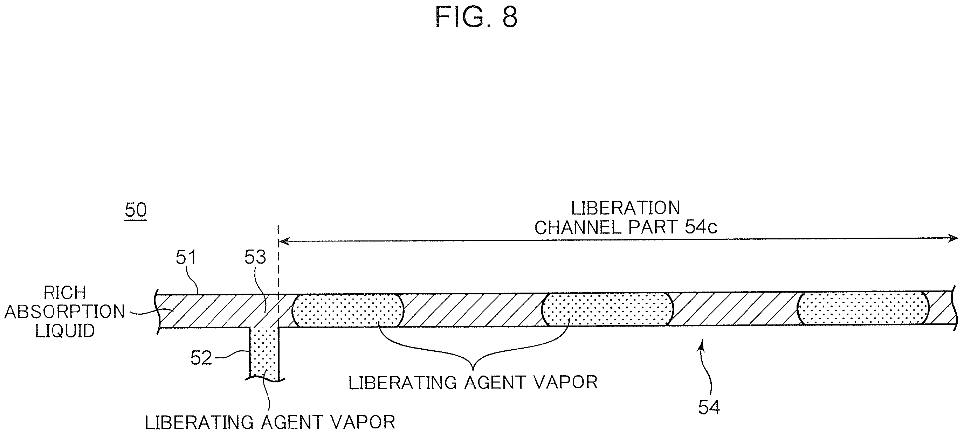

Moreover, the liquid liberating agent is not necessarily vaporized inside the channel structure of the release device. For example, the liberating agent may be vaporized outside the channel structure so that liberating agent vapor is generated, and the generated liberating agent vapor may be supplied to the release channel in the channel structure. FIG. 7 illustrates an example of an absorbing and separating device 1 provided with a release device 3 according to such a variation. Moreover, FIG. 8 is a pattern diagram for explaining a liberation step to be performed at a release channel 50 in a channel structure 32 in the variation.

A liberating agent supply unit of the release device 3 according to this variation is provided outside the release unit 4, and is provided with a vaporization device 60 configured to vaporize a liberating agent so as to generate vapor of the liberating agent. The vaporization device 60 is provided at a conduit which joins the condenser 8 to the liberating agent introducing header 36 of the release unit 4. The vaporization device 60 is for heating and therefore vaporizing a condensed liberating agent discharged from the condenser 8. Liberating agent vapor generated by vaporization by the vaporization device 60 is supplied to the liberating agent introducing header 36, and the liberating agent vapor is distributed and introduced from the liberating agent introducing header 36 to the second receiving channel part 52 of each release channel 50 (see FIG. 3) in the channel structure 32.

In the confluence part 53 of each release channel 50, the liberating agent vapor, which has flown in from the second receiving channel part 52, is subjected to confluence with the rich absorption liquid, which has flown in from the first receiving channel part 51, as illustrated in FIG. 8. The confluent rich absorption liquid and liberating agent vapor then flow from the confluence part 53 into the confluent fluid channel part 54, and liberation treatment is performed in which the specific gas component is liberated from the rich absorption liquid and transferred into the liberating agent vapor as the confluent rich absorption liquid and liberating agent vapor flow through the confluent fluid channel part 54. That is, a whole of the confluent fluid channel part 54 functions as a liberation channel part 54c configured to perform the liberation step in this variation. In other words, the liberation channel part 54c is directly joined to the confluence part 53.

It is possible with this variation to cause the vapor of the liberating agent generated at the vaporization device 60 outside the channel structure 32 to flow through the second receiving channel part 52 into the confluence part 53 and to be subjected to confluence with the rich absorption liquid, which has flown from the first receiving channel part 51 into the confluence part 53. The volume of the liberating agent significantly increases when the liquid liberating agent is vaporized, and therefore it becomes difficult to adjust the mixing ratio of the vapor of the liberating agent to the rich absorption liquid if the liquid liberating agent is introduced to the release channel and is then vaporized. On the contrary, with this variation in which vapor of the liberating agent generated outside the channel structure 32 is introduced to the release channel 50, it is possible to adjust the amount of the introduced vapor of the liberating agent outside the channel structure 32 and easily adjust the mixing ratio of the vapor of the liberating agent to the rich absorption liquid.

[Summary of Embodiment and Variation] The above embodiment and variation can be summarized as follows.

A release device according to the above embodiment and variation is a release device for releasing a specific gas component from a rich absorption liquid which is an absorption liquid containing the specific gas component absorbed therein, the release device including a channel structure internally having a release channel which is connected to a rich absorption liquid supply unit so as to receive the rich absorption liquid supplied from the rich absorption liquid supply unit and connected to a liberating agent supply unit so as to receive a liberating agent supplied from the liberating agent supply unit, the liberating agent having a boiling point lower than a boiling point of the rich absorption liquid and being incompatible with the rich absorption liquid, in which the release channel is a microchannel configured to guide the received rich absorption liquid so that the received rich absorption liquid releases the specific gas component while flowing, and the release channel has a treatment channel part which guides the rich absorption liquid and vapor of the liberating agent while bringing the rich absorption liquid and the vapor of the liberating agent into contact with each other so that the specific gas component is liberated from the rich absorption liquid to be transferred to the vapor of the liberating agent.

In this release device, the treatment channel part of the release channel causes the rich absorption liquid and the vapor of the liberating agent to flow while bringing the rich absorption liquid and the vapor of the liberating agent into contact with each other so that the specific gas component is liberated from the rich absorption liquid and transferred to the vapor of the liberating agent, the liberating agent having a boiling point lower than a boiling point of the rich absorption liquid and being incompatible with the rich absorption liquid. It is therefore possible to use the vapor of the liberating agent, which has been obtained by vaporization with a heat quantity smaller than a heat quantity necessary for vaporization of the absorption liquid, for liberation of the specific gas component from the rich absorption liquid. It is therefore possible to reduce the energy required for release treatment of the specific gas component from the rich absorption liquid in comparison with a conventional structure in which vapor, which has been obtained by vaporization of an absorption liquid, is used for liberating a specific gas component from the rich absorption liquid. Moreover, in this release device, the treatment channel part of the release channel, which is a microchannel, causes the rich absorption liquid and the vapor of the liberating agent to flow while bringing the rich absorption liquid and the vapor of the liberating agent into contact with each other. It is therefore possible to increase the contact area per unit volume of the rich absorption liquid and the vapor of the liberating agent. It is therefore possible to improve the transfer efficiency of the specific gas component from the rich absorption liquid to the vapor of the liberating agent via the contact interface therebetween. As a result, it is possible to improve the efficiency of release treatment of the specific gas component from the rich absorption liquid.

In the release device, the channel structure may internally have a heat supply unit configured to supply heat to the release channel, and the release channel may have: a first receiving channel part configured to receive the rich absorption liquid from the rich absorption liquid supply unit; a second receiving channel part configured to receive a liquid liberating agent from the liberating agent supply unit; a confluence part which is joined to a downstream side end of the first receiving channel part and to a downstream side end of the second receiving channel part so as to receive the rich absorption liquid from the first receiving channel part and the liquid liberating agent from the second receiving channel part to bring the rich absorption liquid and the liquid liberating agent into confluence; and a vaporization channel part which is joined to the confluence part on a downstream side of the confluence part so as to receive from the confluence part a confluent fluid formed of the rich absorption liquid and the liberating agent which have been brought into confluence at the confluence part and joined to an upstream side end of the treatment channel part, the vaporization channel part being configured to receive heat, which vaporizes the liberating agent in the received confluent fluid so as to generate vapor of the liberating agent, from the heat supply unit and configured to guide the generated vapor of the liberating agent and the rich absorption liquid to the treatment channel part.

It is possible with such a structure to vaporize the liberating agent flowing through the vaporization channel part of the release channel in the channel structure so as to generate vapor of the liberating agent with heat supplied from the heat supply unit in the channel structure. It is therefore possible to downsize the release device in comparison with a release device provided with a heating device configured to heat a liberating agent outside the channel structure so as to generate vapor of the liberating agent.

In the release device, the liberating agent supply unit may include a vaporization device which is provided outside the channel structure and configured to vaporize the liquid liberating agent so as to generate vapor of the liberating agent, and the release channel may have: a first receiving channel part configured to receive the rich absorption liquid from the rich absorption liquid supply unit; a second receiving channel part joined to the vaporization device so as to receive the vapor of the liberating agent generated by the vaporization device; and a confluence part which is joined to a downstream side end of the first receiving channel part and to a downstream side end of the second receiving channel part so as to receive the rich absorption liquid from the first receiving channel part and the vapor of the liberating agent from the second receiving channel part to bring the rich absorption liquid and the vapor of the liberating agent into confluence and joined to an upstream side end of the treatment channel part to guide a confluent fluid formed of the rich absorption liquid and the vapor of the liberating agent to the treatment channel part.

It is possible with such a structure to cause the vapor of the liberating agent generated at the vaporization device outside the channel structure to flow through the second receiving channel part into the confluence part and to bring the vapor of the liberating agent into confluence with the rich absorption liquid which has flown from the first receiving channel part into the confluence part. The volume of the liberating agent significantly increases when the liquid liberating agent is vaporized, and therefore it becomes difficult to adjust the mixing ratio of the vapor of the liberating agent to the rich absorption liquid if the liquid liberating agent is introduced to the release channel and is then vaporized. On the contrary, with this structure in which vapor of the liberating agent generated outside the channel structure is introduced to the release channel, it is possible to adjust the amount of the introduced vapor of the liberating agent outside the channel structure. It is therefore possible to easily adjust the mixing ratio of the vapor of the liberating agent to the rich absorption liquid.

Regarding the structure provided with the channel structure, it is preferable that the channel structure internally has a treatment channel heat supply unit configured to supply heat for heating the rich absorption liquid flowing through the treatment channel part to the treatment channel part.

It is possible with such a structure to heat the rich absorption liquid, which flows through the treatment channel part, so as to promote liberation of CO₂ from the rich absorption liquid.

Moreover, a release method according to the embodiment and the variation is a release method for releasing a specific gas component from a rich absorption liquid which is an absorption liquid containing the specific gas component absorbed therein, the release method including: a preparation step of preparing a channel structure internally having a release channel which is a microchannel configured to guide the rich absorption liquid so that the rich absorption liquid releases the specific gas component while flowing, the release channel having a treatment channel part through which the rich absorption liquid and vapor of a liberating agent are capable of flowing in the state of being in contact with each other, the liberating agent having a boiling point lower than a boiling point of the rich absorption liquid and being incompatible with the rich absorption liquid; and a liberation step of liberating the specific gas component from the rich absorption liquid to transfer the specific gas component to the vapor of the liberating agent by causing the rich absorption liquid and the vapor of the liberating agent to flow through the treatment channel part while bringing the rich absorption liquid and the vapor of the liberating agent into contact with each other.

It is possible with such a release method to reduce the energy required for release treatment of the specific gas component from the rich absorption liquid and to improve the efficiency of release treatment of the specific gas component from the rich absorption liquid by a reason similar to the case of the above release device.

In the release method, the channel structure prepared in the preparation step may be a channel structure having the release channel which includes a first receiving channel part, a second receiving channel part, a confluence part and a vaporization channel part in addition to the treatment channel part and being internally provided with a heat supply unit which is capable of supplying heat to the release channel, the confluence part being joined to the first receiving channel part and the second receiving channel part, the vaporization channel part being joined to the confluence part and to the treatment channel part, and the release method may further include: an introduction step of introducing the rich absorption liquid to the first receiving channel part and introducing the liquid liberating agent to the second receiving channel part; a confluence step of bringing the rich absorption liquid and the liquid liberating agent into confluence at the confluence part, the rich absorption liquid being a rich absorption liquid which has flown in the confluence part from the first receiving channel part, the liquid liberating agent being a liquid liberating agent which has flown in the confluence part from the second receiving channel part; and a vaporization step of vaporizing the liberating agent in a confluent fluid formed of the rich absorption liquid and the liquid liberating agent, which have been brought into confluence at the confluence part, with heat supplied from the heat supply unit while causing the confluent fluid to flow through the vaporization channel part so as to generate vapor of the liberating agent and guiding the generated vapor of the liberating agent and the rich absorption liquid to the treatment channel part.

It is possible with such a structure to downsize the release device by a reason similar to the case of the above release device provided with the channel structure internally having the release channel and the heat supply unit.

In the release method, the channel structure prepared in the preparation step may be a channel structure having the release channel which includes a first receiving channel part, a second receiving channel part and a confluence part in addition to the treatment channel part, the confluence part being joined to the first receiving channel part and the second receiving channel part and joined to the treatment channel part, and the release method may further include: a vapor generation step of generating vapor of the liberating agent by vaporizing the liquid liberating agent outside the channel structure; an introduction step of introducing the rich absorption liquid to the first receiving channel part and introducing the vapor of the liberating agent generated in the vapor generation step to the second receiving channel part; and a confluence step of bringing the rich absorption liquid and the vapor of the liberating agent into confluence at the confluence part to guide the rich absorption liquid and the vapor of the liberating agent to the treatment channel part, the rich absorption liquid being a rich absorption liquid which has flown in the confluence part from the first receiving channel part, the vapor of the liberating agent being a vapor which has flown in the confluence part from the second receiving part.

It is possible with such a structure to easily adjust the mixing ratio of the vapor of the liberating agent to the rich absorption liquid by a reason similar to the case of the above release device provided with the vaporization device provided outside the channel structure.

In the release method, it is preferable that the channel structure prepared in the preparation step is a channel structure internally having a treatment channel heat supply unit which supplies heat to the treatment channel part, and the rich absorption liquid flows through the treatment channel part while the rich absorption liquid is heated by heat supplied from the treatment channel heat supply unit in the liberation step.

It is possible with such a structure to heat the rich absorption liquid, which flows through the treatment channel part, so as to promote liberation of CO₂ from the rich absorption liquid.

As described above, it is possible with the embodiment and the variation to reduce the energy required for treatment of releasing a specific gas component from an absorption liquid containing the specific gas component absorbed therein, and to improve the efficiency of release treatment of the specific gas component.

## Claims

1. A release device for releasing a specific gas component from a rich absorption liquid which is an absorption liquid containing the specific gas component absorbed therein,
the release device comprising a channel structure internally having a release channel which is connected to a rich absorption liquid supply unit so as to receive the rich absorption liquid supplied from the rich absorption liquid supply unit and connected to a liberating agent supply unit so as to receive a liberating agent supplied from the liberating agent supply unit, the liberating agent having a boiling point lower than a boiling point of the rich absorption liquid and being incompatible with the rich absorption liquid,
wherein the release channel is a microchannel configured to guide the received rich absorption liquid so that the received rich absorption liquid releases the specific gas component while flowing, and
the release channel has a treatment channel part which guides the rich absorption liquid and vapor of the liberating agent while bringing the rich absorption liquid and the vapor of the liberating agent into contact with each other so that the specific gas component is liberated from the rich absorption liquid to be transferred to the vapor of the liberating agent.

2. The release device according to claim 1, wherein
the channel structure internally has a heat supply unit configured to supply heat to the release channel, and
the release channel has:
a first receiving channel part configured to receive the rich absorption liquid from the rich absorption liquid supply unit;
a second receiving channel part configured to receive a liquid liberating agent from the liberating agent supply unit;
a confluence part which is joined to a downstream side end of the first receiving channel part and to a downstream side end of the second receiving channel part so as to receive the rich absorption liquid from the first receiving channel part and the liquid liberating agent from the second receiving channel part to bring the rich absorption liquid and the liquid liberating agent into confluence; and
a vaporization channel part which is joined to the confluence part on a downstream side of the confluence part so as to receive from the confluence part a confluent fluid formed of the rich absorption liquid and the liberating agent which have been brought into confluence at the confluence part and joined to an upstream side end of the treatment channel part, the vaporization channel part being configured to receive heat, which vaporizes the liberating agent in the received confluent fluid so as to generate vapor of the liberating agent, from the heat supply unit and configured to guide the generated vapor of the liberating agent and the rich absorption liquid to the treatment channel part.

3. The release device according to claim 1,
wherein the liberating agent supply unit comprises a vaporization device which is provided outside the channel structure and configured to vaporize the liquid liberating agent so as to generate vapor of the liberating agent, and
the release channel has:
a first receiving channel part configured to receive the rich absorption liquid from the rich absorption liquid supply unit;
a second receiving channel part joined to the vaporization device so as to receive the vapor of the liberating agent generated by the vaporization device; and
a confluence part which is joined to a downstream side end of the first receiving channel part and to a downstream side end of the second receiving channel part so as to receive the rich absorption liquid from the first receiving channel part and the vapor of the liberating agent from the second receiving channel part to bring the rich absorption liquid and the vapor of the liberating agent into confluence and joined to an upstream side end of the treatment channel part to guide a confluent fluid formed of the rich absorption liquid and the vapor of the liberating agent to the treatment channel part.

4. The release device according to claim 1, wherein the channel structure internally has a treatment channel heat supply unit configured to supply heat for heating the rich absorption liquid flowing through the treatment channel part to the treatment channel part.

5. A release method for releasing a specific gas component from a rich absorption liquid which is an absorption liquid containing the specific gas component absorbed therein, the release method comprising:
a preparation step of preparing a channel structure internally having a release channel which is a microchannel configured to guide the rich absorption liquid so that the rich absorption liquid releases the specific gas component while flowing, the release channel having a treatment channel part through which the rich absorption liquid and vapor of a liberating agent are capable of flowing in the state of being in contact with each other, the liberating agent having a boiling point lower than a boiling point of the rich absorption liquid and being incompatible with the rich absorption liquid; and
a liberation step of liberating the specific gas component from the rich absorption liquid to transfer the specific gas component to the vapor of the liberating agent by causing the rich absorption liquid and the vapor of the liberating agent to flow through the treatment channel part while bringing the rich absorption liquid and the vapor of the liberating agent into contact with each other.

6. The release method according to claim 5,
wherein the channel structure prepared in the preparation step is a channel structure having the release channel which includes a first receiving channel part, a second receiving channel part, a confluence part and a vaporization channel part in addition to the treatment channel part and being internally provided with a heat supply unit which is capable of supplying heat to the release channel, the confluence part being joined to the first receiving channel part and the second receiving channel part, the vaporization channel part being joined to the confluence part and to the treatment channel part, and
the release method further comprises:
an introduction step of introducing the rich absorption liquid to the first receiving channel part and introducing the liquid liberating agent to the second receiving channel part;
a confluence step of bringing the rich absorption liquid and the liquid liberating agent into confluence at the confluence part, the rich absorption liquid being a rich absorption liquid which has flown in the confluence part from the first receiving channel part, the liquid liberating agent being a liquid liberating agent which has flown in the confluence part from the second receiving channel part; and
a vaporization step of vaporizing the liberating agent in a confluent fluid formed of the rich absorption liquid and the liquid liberating agent, which have been brought into confluence at the confluence part, with heat supplied from the heat supply unit while causing the confluent fluid to flow through the vaporization channel part so as to generate vapor of the liberating agent and guiding the generated vapor of the liberating agent and the rich absorption liquid to the treatment channel part.

7. The release method according to claim 5,
wherein the channel structure prepared in the preparation step is a channel structure having the release channel which includes a first receiving channel part, a second receiving channel part and a confluence part in addition to the treatment channel part, the confluence part being joined to the first receiving channel part and the second receiving channel part and joined to the treatment channel part, and
the release method further comprises:
a vapor generation step of generating vapor of the liberating agent by vaporizing the liquid liberating agent outside the channel structure;
an introduction step of introducing the rich absorption liquid to the first receiving channel part and introducing the vapor of the liberating agent generated in the vapor generation step to the second receiving channel part; and
a confluence step of bringing the rich absorption liquid and the vapor of the liberating agent into confluence at the confluence part to guide the rich absorption liquid and the vapor of the liberating agent to the treatment channel part, the rich absorption liquid being a rich absorption liquid which has flown in the confluence part from the first receiving channel part, the vapor of the liberating agent being a vapor which has flown in the confluence part from the second receiving part.

8. The release method according to claim 5,
wherein the channel structure prepared in the preparation step is a channel structure internally having a treatment channel heat supply unit which supplies heat to the treatment channel part, and
the rich absorption liquid flows through the treatment channel part while the rich absorption liquid is heated by heat supplied from the treatment channel heat supply unit in the liberation step.
